(19) Europäisches Patentamt
European Patent Office
Office européen des brevets

(11) **EP 3 316 225 B1**

(12) **FASCICULE DE BREVET EUROPÉEN**

(45) Date de publication et mention de la délivrance du brevet:
**10.03.2021 Bulletin 2021/10**

(51) Int Cl.:
***G07C 1/22*** *(2006.01)*    ***G07C 1/24*** *(2006.01)*
***G07C 9/00*** *(2020.01)*

(21) Numéro de dépôt: **16196722.9**

(22) Date de dépôt: **01.11.2016**

(54) **MODULE À TRANSPONDEUR POUR LA DÉTERMINATION D'UN TEMPS DE PASSAGE DANS UN SYSTÈME DE MESURE**

MODUL MIT TRANSPONDER ZUR BESTIMMUNG EINER DURCHLAUFZEIT IN EINEM MESSSYSTEM

TRANSPONDER MODULE FOR DETERMINING A TRANSIT TIME IN A MEASUREMENT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**02.05.2018 Bulletin 2018/18**

(73) Titulaire: **Swiss Timing Ltd.**
**2606 Corgémont (CH)**

(72) Inventeurs:
• **Galli, Reto**
  **3053 Münchenbuchsee (CH)**
• **Choffat, Frédéric**
  **2942 Alle (CH)**
• **Zanetta, André**
  **2075 Wavre (CH)**
• **Klohr, Nikias**
  **D-76297 Stutensee (DE)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
**EP-A1- 2 747 036    EP-A1- 3 073 447**
**WO-A1-98/06184**

## Description

Domaine de l'invention

L'invention concerne un module à transpondeur pour la détermination d'un temps de passage sur une ligne de passage pour une compétition sportive dans un système de mesure d'un temps de passage.

L'invention concerne également un système de mesure ou détermination d'au moins un temps de passage, qui comprend au moins un module à transpondeur porté par un objet en mouvement.

L'invention concerne également le procédé de détermination d'un temps de passage pour la mise en action du module à transpondeur du système de mesure.

Arrière-plan de l'invention

Pour la détermination d'un temps de passage, plusieurs systèmes de chronométrage sont connus avec l'utilisation de plusieurs modules à transpondeur actifs et portés chacun sur un compétiteur respectif. Ces systèmes de chronométrage utilisent généralement une antenne disposée sur le sol à proximité d'une ligne de passage, telle qu'une ligne d'arrivée et transmettant un signal à basse fréquence, tel qu'à une fréquence de l'ordre de 125 kHz. Ce signal à basse fréquence permet de réveiller chaque module à transpondeur s'approchant à une certaine distance de la ligne de passage. Une fois que le module à transpondeur est réveillé, il est connu deux implémentations différentes du système de chronométrage, qui sont décrites sommairement ci-après.

Selon une première implémentation, le module à transpondeur réveillé utilise une communication à haute fréquence par exemple de l'ordre de 6.8 MHz pour communiquer avec une station de base du système de chronométrage. Il transmet des messages, qui contiennent notamment son code d'identification et plusieurs autres informations dans un intervalle de temps variable selon le protocole Aloha. Ce protocole Aloha est bien connu dans ce domaine technique depuis les années 1970 et est décrit sous le site Internet https://en.wikipedia.org/wiki/ALOHAnet. Il permet à plusieurs modules à transpondeur de transmettre de l'information sur un même canal de communication, mais à des intervalles aléatoires.

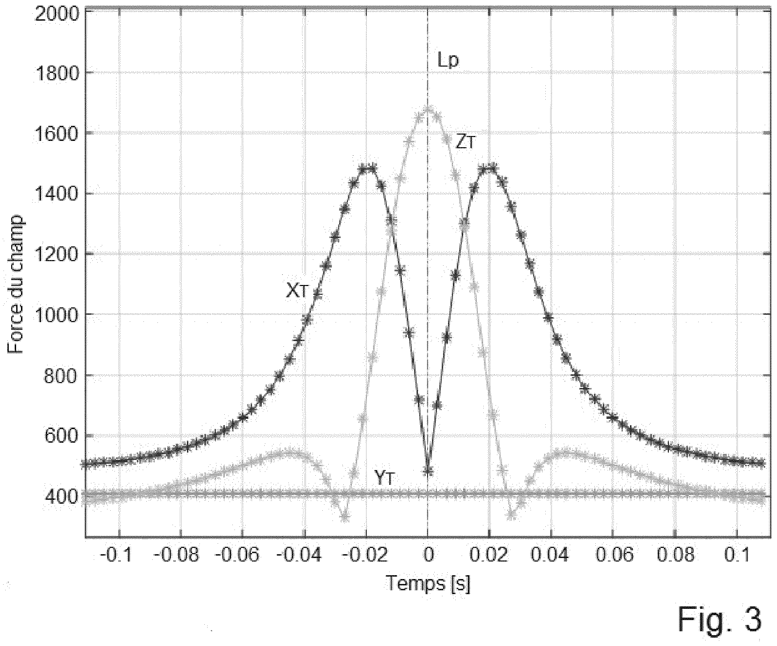

Au niveau d'une ligne de passage pour la mesure d'un temps, il est prévu une antenne au sol ou sur les côtés, qui peut recevoir notamment le message à code d'identification du module à transpondeur. Cette antenne au sol ou sur les côtés peut être la même antenne utilisée pour réveiller le module à transpondeur. Dès la réception du message par l'antenne au sol ou sur les côtés, un décodeur est connecté à l'antenne. Ce décodeur assigne une estampille temporelle au message reçu et mesure également la force RSSI du signal reçu. Cette force du signal capté suit une courbe typique ou théorique comme représentée à la figure 3. Ainsi la courbe dépend de l'orientation du module à transpondeur et de l'antenne réceptrice en tenant compte des trois axes de mesure. Sur la base de cette courbe, le décodeur peut déterminer le temps exact du passage du compétiteur avec son module à transpondeur en utilisant un algorithme dédicacé spécifique à une compétition sportive. Une telle implémentation est notamment décrite dans les demandes de brevet US 2006/0097847 A1 et WO 02/21141 A1.

Selon une seconde implémentation, le module à transpondeur réveillé mesure la force du champ magnétique du signal à basse fréquence transmis par l'antenne au sol ou sur les côtés, qui est l'antenne pour le réveil du module à transpondeur. Les mesures de la force du champ magnétique sont effectuées selon une ou plusieurs directions à intervalles réguliers. Les résultats des mesures sont envoyés par le module à transpondeur en utilisant une communication à ultra haute fréquence UHF par exemple à 868 MHz ou 915 MHz. Ces résultats de mesure sont reçus par une seconde antenne d'un décodeur. Un ou plusieurs points de mesure peuvent être contenus dans le signal UHF de données transmis par le module à transpondeur. Il peut y avoir également de l'information redondante dans le signal UHF transmis.

Dès la réception du signal UHF de données, le décodeur assigne une estampille temporelle précise du message reçu. Comme décrit ci-dessus en référence à la figure 3 avec le module à transpondeur passant proche ou sur l'antenne au sol, la force du champ magnétique mesurée par le module à transpondeur suit une courbe typique ou théorique. La force du champ mesurée dépend de l'orientation du module à transpondeur, ainsi que de l'antenne émettrice. Sur la base de cette courbe, le décodeur peut déterminer le temps exact de passage sur la ligne de passage en utilisant un algorithme dédicacé spécifique à une compétition sportive. Une telle implémentation est notamment décrite dans le brevet EP 1 447 681 B1 et les demandes de brevet CH 707 401 A2, EP 2 747 036 A1 et EP 3 073 447 A1.

Pour obtenir une bonne précision dans la détection du temps de passage, un grand nombre de points de données doit être fourni au décodeur. Ainsi, plusieurs messages de mesures doivent être envoyés depuis le module à transpondeur au décodeur. Cela limite le nombre de modules à transpondeur, qui peuvent être traités en parallèle. De plus, cela augmente la largeur de bande radio, qui est utilisée pour transmettre toute cette information, ce qui est désavantageux.

Si les messages sont perdus durant la communication HF ou UHF, les courbes de force du champ sont incomplètes et l'algorithme peut détecter le passage uniquement avec une précision diminuée.

La demande de brevet JP 2002-228777 A décrit un système de mesure du temps d'un objet en mouvement notamment pour une course de chevaux, vélos ou voitures. Un champ magnétique est généré par des bobines disposées sous le sol du champ de course à des lignes de passage pour permettre d'obtenir un temps de passage sur la base d'une valeur pic de l'intensité du champ magnétique mesurée par un module à transpondeur disposé sur l'objet en mouvement. Trois capteurs magnétiques peuvent être prévus dans le module à transpondeur pour mesurer le champ magnétique selon les trois axes de mesure. Il peut encore être défini un écart de temps par la détection de deux valeurs pics à deux lignes de passage successives. Les données de mesure de la valeur pic du champ magnétique sont mémorisées dans le module à transpondeur et peuvent être transmises à l'arrivée de la course à un décodeur pour déterminer des temps intermédiaires et un temps final de la course de l'objet en mouvement.

Dans cette demande de brevet JP 2002-228777 A, il n'est pas prévu d'effectuer des mesures de plusieurs points du champ magnétique dans le module à transpondeur et reconstruire la courbe du champ magnétique afin de déterminer précisément le temps de passage dans le module à transpondeur. De plus, le module à transpondeur ne transmet pas le résultat du temps de passage déterminé notamment sur la ligne d'arrivée selon le protocole Aloha à un décodeur d'arrivée, ce qui constitue un inconvénient. De plus, le décodeur d'arrivée n'est pas en mesure de traiter en parallèle l'information d'un grand nombre de modules à transpondeur passant au même moment sur la ligne de passage, ce qui constitue un autre inconvénient Dans la demande de brevet EP 2 747 036 A1, un module à transpondeur comprenant un microcontrôleur ayant une base de temps est décrit. Le microcontrôleur est capable de recevoir plusieurs signaux près d'une ligne de passage et de déterminer le temps de passage en se servant des mesures d'intensités des signaux reçus.

Dans la demande de brevet EP 3 073 447 A1 est divulgué un module à transpondeur comprenant un microcontrôleur ayant une base de temps. Le microcontrôleur est capable de recevoir plusieurs signaux à côté d'une ligne de passage et d'envoyer les mesures d'intensités des signaux reçus à une unité à décodeur.

Aucun système de l'état de la technique ne permet de tenir compte du temps d'arrivée avec un traitement précis et facile pour un très grand nombre de modules à transpondeur à identifier séparément et susceptibles de passer à un même instant de la course sur la ligne de passage.

Résumé de l'invention

L'invention a donc pour but de pallier les inconvénients de l'état de la technique susmentionné en proposant un module à transpondeur disposé sur un objet en mouvement d'un système de mesure d'un temps de passage pour la détermination précise d'un temps de passage sur une ligne de passage.

A cet effet, l'invention concerne un module à transpondeur disposé sur un objet en mouvement pour déterminer au moins un temps de passage sur une ligne de passage, qui comprend les caractéristiques définies dans la revendication indépendante 1.

Des formes d'exécution particulières du module à transpondeur sont définies dans les revendications dépendantes 2 à 7.

Un avantage du module à transpondeur disposé sur un objet en mouvement dans une compétition sportive réside dans le fait que comme la mesure du temps de passage est déterminée directement dans le module à transpondeur par la reconstruction de la courbe du champ magnétique sur la base des différents points de mesure, la quantité de données transmises par le module à transpondeur est fortement réduite. Cela augmente également le nombre de modules à transpondeur, qui peuvent être traités en parallèle par l'unité à décodeur du système de mesure. Par exemple, une centaine de modules à transpondeur activés peuvent être traités en parallèle. De plus, cela réduit la largeur de bande radio utilisée pour la communication.

Avantageusement, la transmission du résultat de la mesure du temps de passage peut être effectuée à des intervalles réguliers suite à la réception du signal du champ électromagnétique de réveil et synchronisation, ou à des intervalles variables selon le protocole Aloha.

Avantageusement, la perte de messages UHF lors de la transmission de signaux du module à transpondeur ne réduit pas la précision de détermination d'un temps de course du système de mesure. Tous les points de données sont toujours disponibles pour la détection dans le système de mesure, étant donné que c'est le module à transpondeur, qui détermine le temps de passage sur la ligne de passage. Cela peut spécialement être avantageux dans des environnements radio difficiles.

Avantageusement, comme la communication radio cause une consommation de puissance importante dans le module à transpondeur plus grande que le calcul proprement dit par l'algorithme dédicacé, le temps de vie de la batterie du module à transpondeur peut être augmenté. Ceci provient du fait que peu de messages de données sont transmis par le module à transpondeur à l'unité à décodeur. De plus, le microprogramme du module à transpondeur peut être facilement remis à jour.

A cet effet, l'invention concerne également un système de mesure d'au moins un temps de passage d'au moins un module à transpondeur pour la mesure d'un temps de passage sur une ligne de passage, qui comprend les caractéristiques définies dans la revendication indépendante 8.

Des formes d'exécution particulières du système de mesure sont définies dans les revendications dépendantes 9 à 14.

A cet effet, l'invention concerne aussi un procédé de détermination d'un temps de passage pour la mise en action d'au moins un module à transpondeur d'un système de mesure, qui comprend les caractéristiques définies dans la revendication indépendante 15.

Des étapes particulières du procédé sont définies dans des revendications dépendantes 16 à 19.

Brève description des dessins

Les buts, avantages et caractéristiques du module à transpondeur disposé sur un objet en mouvement dans un système de mesure automatisé, le système et le procédé de détermination d'un temps de passage pour la mise en action du module à transpondeur selon l'invention apparaîtront mieux dans la description suivante d'au moins une forme d'exécution non limitative illustrée par les dessins sur lesquels :

la figure 1 représente schématiquement un système de mesure automatisé, qui comprend plusieurs modules à transpondeur pour la mise en œuvre d'un procédé de mesure d'au moins un temps de passage sur une ligne de passage dans une compétition sportive selon l'invention,

la figure 2 représente une forme d'exécution d'un module à transpondeur pour la détermination d'au moins un temps de passage sur une ligne de passage selon l'invention, et

la figure 3 représente un graphe de la forme du champ magnétique mesuré selon les trois directions spatiales lors du passage de la ligne de passage.

Description détaillée de l'invention

Dans la description suivante, tous les éléments du système de mesure et du module à transpondeur pour la détermination d'un temps de passage sur une ligne de passage, qui sont bien connus de l'homme du métier dans ce domaine technique, ne seront relatés que de manière simplifiée.

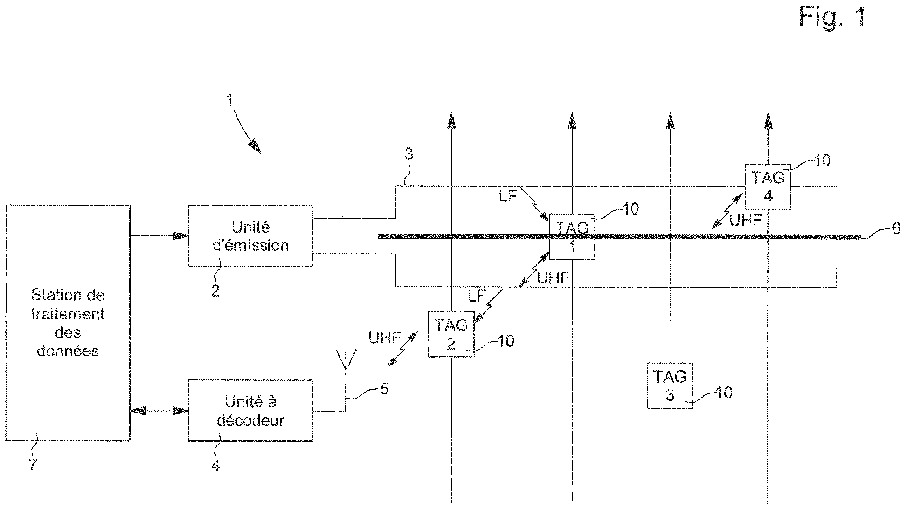

La figure 1 représente schématiquement un système de mesure automatisé 1, qui peut être utilisé dans tout type de compétition sportive principalement pour déterminer un temps de course ou également un ordre de passage d'un objet en mouvement. Ce système de mesure 1 peut par exemple être utilisé pour une compétition d'athlétisme, une course à vélo, une course de chevaux, une course automobile ou une autre compétition sportive. Cet objet en mouvement peut être un compétiteur, un cheval, un vélo, un véhicule.

Le système de mesure 1 comprend de préférence au moins une unité d'émission 2 pour la génération d'un signal notamment à basse fréquence LF, qui est un signal de champ électromagnétique émis par une antenne d'émission 3 disposée au sol ou sur le ou les côtés de la ligne ou en dessus. Elle peut être de préférence centrée sur une ligne de passage 6, qui peut être une ligne de passage intermédiaire ou une ligne d'arrivée. Le système comprend également un ou plusieurs modules à transpondeur 10, définis comme TAG1, TAG2, TAG3, TAG4 susceptibles d'être disposés chacun sur un objet en mouvement, tel qu'un compétiteur ou un vélo ou une voiture ou un cheval de course ou autre animal. Chaque module à transpondeur 10 est personnalisé à l'objet, sur lequel il est placé. Le système comprend enfin une unité de réception ou unité à décodeur 4 pour recevoir par une antenne de réception 5 des signaux à haute fréquence UHF transmis par les modules à transpondeur activés pour la détermination d'un temps de passage sur une ligne de passage 6. L'unité d'émission 2 et l'unité à décodeur 4 sont reliées à et commandées par une station de traitement des données 7.

Il est à noter que la station de traitement 7 peut être utilisée pour le traitement des informations de l'unité à décodeur 4 et l'affichage des différents temps des coureurs, chevaux ou véhicules avec leur classement. L'unité à décodeur 4 peut aussi être utilisée pour programmer chaque module à transpondeur 10 comme expliqué ci-après par une transmission d'un signal à haute fréquence avec modulation numérique ou GFSK des données ou commandes. Sur cette figure 1, il n'est pas représenté une éventuelle deuxième antenne pour effectuer une transmission vers le module à transpondeur. Le signal transmis par l'unité à décodeur 4 peut aussi servir à personnaliser ledit module par exemple au coureur respectif. De plus, le signal UHF transmis par l'unité à décodeur 4 peut aussi permettre de désactiver chaque module à transpondeur une fois que la ligne de passage 6 a été passée par ledit objet en mouvement avec le module à transpondeur.

Chaque module à transpondeur 10 s'approchant de la ligne de passage 6 peut être réveillé par le signal de champ électromagnétique généralement à basse fréquence. De plus pour une synchronisation du module à transpondeur 10, il peut être prévu aussi de transmettre un signal de champ électromagnétique avec une modulation d'une commande de synchronisation depuis l'antenne 3 de l'unité d'émission 2, suite au réveil du module à transpondeur 10. Le module à transpondeur personnalisé 10 est de préférence un module à transpondeur du type actif, c'est-à-dire muni d'une batterie pour l'alimentation électrique des composants électroniques le constituant. En principe pour pouvoir mettre en fonction l'algorithme dédicacé pour déterminer le temps de passage, le module à transpondeur doit être du type actif. Cependant pour réduire sa consommation électrique, il est généralement dans un mode de repos.

Comme représenté à la figure 1, le premier module à transpondeur TAG1 se trouve sur la ligne de passage 6, qui peut être la ligne d'arrivée. Il est réveillé et éventuellement synchronisé par le signal à basse fréquence LF modulé de l'antenne d'émission 3. Le second module à transpondeur TAG2 se trouve à une distance proche de l'antenne d'émission 3 et capable d'être réveillé par le signal à basse fréquence LF. Le troisième module à transpondeur TAG3 se trouve à une distance éloignée de l'antenne d'émission 3. Ainsi, le troisième module à transpondeur n'est pas en mesure d'être réveillé par le signal à basse fréquence LF et reste dans un mode de repos. Le quatrième module à transpondeur TAG4 est montré ayant passé la ligne d'arrivée et dans ce cas, il est en mesure de recevoir une commande de l'unité à décodeur 4 pour le désactiver et le placer dans un mode de repos. Toutefois le quatrième module à transpondeur TAG4 peut aussi se déconnecter automatiquement après plusieurs répétitions de messages successifs transmis. Ce quatrième module à transpondeur TAG4 a été en mesure de déterminer le temps de passage dans le module à transpondeur comme expliqué ci-après en ayant fourni le résultat à l'unité à décodeur 4 pour déterminer précisément le temps de passage.

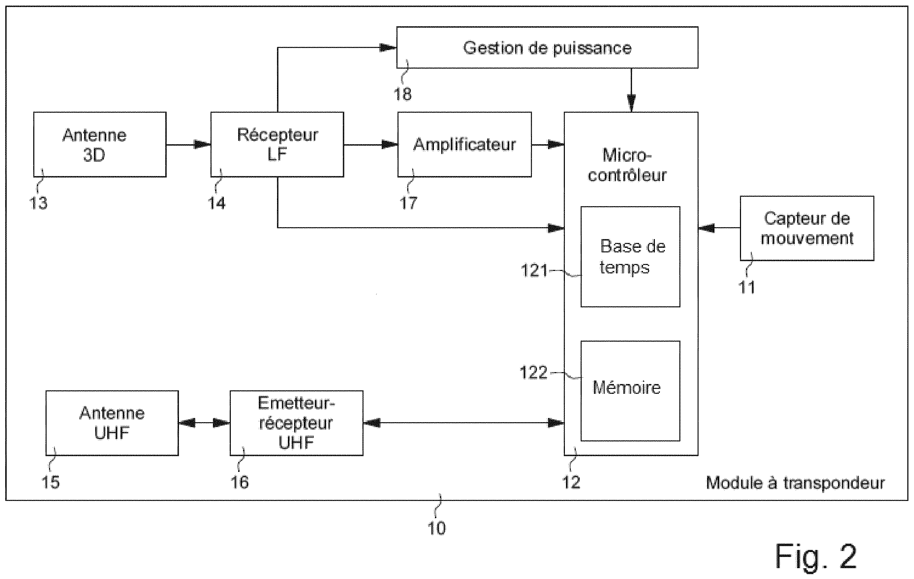

Une forme d'exécution du module à transpondeur 10, qui peut être utilisé pour tout type de compétition sportive, est représentée à la figure 2. Le module à transpondeur 10 peut comprendre un récepteur de signaux 14, tels que des signaux à basse fréquence, pour recevoir des signaux à basse fréquence, tels que des signaux de champ électromagnétique, par une antenne 13. Cette antenne de réception 13 peut être une antenne de préférence triaxiale.

Pour réduire la consommation électrique du module à transpondeur, une unité de gestion de puissance 18 peut être prévue. La batterie peut faire partie de cette unité de gestion ou y être reliée. L'unité de gestion de puissance 18 permet de commander l'alimentation électrique des composants électroniques du module à transpondeur, normalement dès la réception d'une commande de réveil et éventuellement de synchronisation d'un signal basse fréquence transmis par l'antenne 3. Cette synchronisation peut être obtenue par une modulation par exemple en tout ou rien.

Le module à transpondeur 10 comprend encore un émetteur ou un émetteur-récepteur haute fréquence 16 pour la transmission de signaux UHF par une antenne 15 ou un ensemble d'antennes avec couplage électromagnétique d'un ou plusieurs signaux d'information. Ces signaux d'information sont à une fréquence porteuse située entre 300 MHz et 3'000 MHz, ou d'autres fréquences en dehors de cette bande de fréquences. Le ou les signaux d'information sont transmis sur commande d'un microcontrôleur 12 à l'unité à décodeur 4 du système de mesure 1 de la figure 1. Le module à transpondeur comprend encore une base de temps 121 intégrée dans le microcontrôleur 12, qui peut être synchronisée par le signal de champ électromagnétique LF modulé et capté. Une mémoire 122 du microcontrôleur 12 permet de mémoriser toutes les mesures ou forces du champ électromagnétique capté par l'antenne triaxiale 13.

Le module à transpondeur peut encore comprendre un capteur de mouvement 11, tel qu'un accéléromètre pour faciliter et améliorer la détermination d'un temps de course. Ce capteur de mouvement 11 est relié au microcontrôleur 12. Dans le cas d'une compétition sportive, telle qu'une course à vélo sur piste, la ligne de passage peut comprendre une bande d'une certaine épaisseur. Le capteur de mouvement du module à transpondeur disposé sur le cadre du vélo peut détecter une variation brutale du mouvement suite au choc de la roue de vélo sur ladite bande de passage. Ainsi, il peut fournir une information dans un signal UHF transmis par le module à transpondeur 10.

Le récepteur de signaux à basse fréquence 14 du module à transpondeur 10 est relié au microcontrôleur 12 et à l'unité de gestion de puissance 18. En sortie, le récepteur peut encore éventuellement être relié à un amplificateur 17, qui fournit un signal de réception amplifié au microcontrôleur 12 pour la mesure du niveau du champ capté par le module à transpondeur. Ceci permet d'augmenter la dynamique de mesure. Ainsi il est possible de capter de très petits signaux à basse fréquence ou de très forts signaux à basse fréquence.

Une fois activé, le module à transpondeur 10 peut mesurer par l'antenne triaxiale 13 un ou plusieurs groupes successifs de mesures d'intensité du champ électromagnétique capté. Il peut mesurer différents points d'intensité du champ électromagnétique capté. Un groupe de mesures d'intensité comprend trois mesures du champ électromagnétique selon les axes X, Y, Z, capté par l'antenne triaxiale 13 à un temps donné une fois que la base de temps 121 du microcontrôleur 12 est activée et éventuellement synchronisée. Cette base de temps 121 débute le compte du temps une fois activée. Chaque groupe de mesures d'intensité du champ électromagnétique, définit un paquet de données ou un point de données relatif à chaque temps déterminé de mesure. Ces mesures selon les trois axes de mesure sont généralement définies par un circuit d'indication de force du signal reçu. Chaque groupe de mesures d'intensité obtenu peut être mémorisé dans la mémoire 122 du microcontrôleur 12 dans le module à transpondeur 10. De préférence, il est obtenu deux, trois, quatre ou plus de groupes de mesures d'intensité, par exemple à des intervalles de temps réguliers ou à des intervalles de temps aléatoires, qui sont mémorisés. Un plus grand nombre de mesures d'intensité peut être envisagé dans le module à transpondeur pour pouvoir déterminer précisément le temps de passage par reconstruction de la courbe de champ magnétique ou électromagnétique dans ledit module à transpondeur.

A titre illustratif, la figure 3 représente un graphe de la forme du champ magnétique mesuré selon les trois directions spatiales X, Y, Z, lors du passage de la ligne de passage Lp. En fonction de l'orientation du module à transpondeur par exemple comme montré sur la figure 3, l'axe X est la direction du mouvement du module à transpondeur et donne la courbe $X_T$, l'axe Z définit la direction verticale en donnant la courbe $Z_T$, et l'axe Y donne la courbe $Y_T$. Plusieurs points de mesure du champ électromagnétique peuvent être mesurés dès l'activation du module à transpondeur 10 de la figure 2. Ces différents points de mesure selon les trois axes sont mémorisés dans la mémoire 122 du microcontrôleur 12. Une reconstruction de la courbe du champ magnétique peut être calculée dans le microcontrôleur 12, afin de déterminer précisément le temps de passage dans le module à transpondeur 10 selon la base de temps 121 du microcontrôleur 12.

Le module à transpondeur 10 dispose d'un algorithme dédicacé ou microprogramme dans le microcontrôleur 12 pour déterminer le temps précis de passage de la ligne de passage. Cette détermination du temps précis est effectuée directement dans le circuit intégré du module à transpondeur 10 par l'utilisation du microprogramme dédicacé. Pour cette détermination du temps une fois sa base de temps 121 activée, le module à transpondeur analyse la courbe mesurée du champ électromagnétique sur la base de plusieurs points de mesures d'intensité. Ceci lui permet de déterminer précisément le temps de passage, afin d'envoyer le résultat de cette détermination à l'unité à décodeur par une communication UHF. La valeur de comptage du temps de la base de temps activée du module à transpondeur peut aussi être envoyée avec le temps de passage. Ceci permet à l'unité à décodeur de déterminer précisément le temps exact de passage après conversion temporelle.

La communication UHF pour transmettre les résultats à l'unité à décodeur peut utiliser un ou plusieurs canaux UHF en utilisant les sauts de fréquence ("Frequency Hopping" en terminologie anglaise). Les sauts de fréquence peuvent être selon un schéma à sauts fixés ou établis de manière aléatoire. La transmission peut être synchronisée en temps par le cadre du champ de réveil LF, ou peut survenir à des intervalles aléatoires en utilisant le protocole Aloha. Pour éviter des collisions avec des messages d'autres modules à transpondeurs 10, il utilise le procédé « écouter avant de parler » LBT ("Listen Before Talk" en terminologie anglaise) selon n'importe quelle configuration. Le module à transpondeur 10 répète un résultat transmis, jusqu'à ce qu'il obtienne une confirmation de l'unité à décodeur en utilisant un canal retour (Uplink) UHF ou jusqu'à ce qu'il atteigne un temps mort ou une interruption.

Selon les figures 1 et 2, le module à transpondeur 10 contient donc sa propre base de temps 121 et génère le résultat de détermination d'un temps de passage par rapport à cette base de temps. Comme indiqué précédemment, avec chaque message, il peut envoyer à l'unité à décodeur 4, aussi la valeur courante de sa base de temps. L'unité à décodeur 4 assigne ou attribue à chaque message reçu du module à transpondeur, une estampille temporelle. Cette estampille temporelle est de préférence synchronisée au temps du jour. En utilisant une estampille temporelle, la valeur courante de la base de temps du module à transpondeur 10 et le résultat transmis par le module à transpondeur, l'unité à décodeur 4 peut calculer le temps précis de passage par rapport à sa propre base de temps.

Pour chaque passage, le module à transpondeur 10 activé peut envoyer trois messages. Un premier message comme un premier contact après le réveil, un second message comme une prédiction du passage juste avant le passage proprement dit de la ligne de passage 6 selon le résultat de l'algorithme de détection, et un troisième message avec le temps exact de passage, qui est aussi un résultat de l'algorithme de détection. Le premier message de contact est utilisé pour identifier un module à transpondeur 10 activé et proche de la ligne de passage 6. La prédiction de passage peut être utilisée pour arrêter un temps en cours sur un tableau d'affichage ou sur une télévision de manière qu'il ne revienne jamais en arrière une fois que le temps exact du passage est connu. Le dernier ou troisième message avec le temps exact de passage est généré de 50 à 100 ms après le passage proprement dit de la ligne de passage. Ce dernier message est utilisé pour déterminer un classement final ou comme une entrée pour un appareil à photofinish pour obtenir plus rapidement le résultat.

Il est à noter que des algorithmes pour détecter le temps de passage peuvent changer pour diverses raisons par exemple en fonction des orientations des différentes antennes utilisées, des mouvements du module à transpondeur passant l'antenne. De ce fait, il est essentiel que le microprogramme du module à transpondeur 10, qui contient de tels algorithmes, soit remis à jour d'une manière simple. Même en ayant cet algorithme dans plusieurs modules à transpondeur, quelques fois plus de 100 modules à transpondeur, il est possible que l'unité à décodeur 4 permette de mettre à jour le microprogramme de chaque module à transpondeur 10 en utilisant le même lien UHF, que celui qui est utilisé pour prendre connaissance de la réception des résultats. Un logiciel de démarrage dans l'unité à décodeur 4 peut être prévu pour la remise à jour du microprogramme de chaque module à transpondeur. Ainsi, un ensemble non limité de modules à transpondeur 10 peut être mis à jour simultanément. Principalement cette remise à jour du microprogramme ou de l'algorithme dédicacé de chaque module peut être effectuée avant le déroulement de la compétition sportive.

Pour mettre à jour le microprogramme, l'unité à décodeur 4 ou éventuellement un dispositif de mise à jour dédicacé de modules à transpondeur 10, envoie après réception d'un premier message de contact, une commande de déblocage spécial en utilisant le canal retour (Uplink). Ensuite, il répète l'émission du microprogramme entier plusieurs fois, et après chaque transmission du microprogramme, chaque module à transpondeur 10 répond. Une fois que le module à transpondeur 10 est débloqué pour la mise à jour, une confirmation de réception du microprogramme complet à l'unité à décodeur 4 ou au dispositif de remise à jour arrête l'émission du microprogramme.

Il est encore à noter qu'en lieu et place de transmettre les résultats à l'unité à décodeur 4 de la figure 1 en utilisant une communication propriétaire UHF, le module à transpondeur 10 peut aussi être connecté à un réseau à capteurs en utilisant n'importe quelle technologie standard à large bande par exemple UMTS/HSPA (3G), LoRa (LPWAN), ou autres, comme ils sont utilisés dans des applications IoT (Internet de choses). Dans une telle solution, le module à transpondeur 10 doit être synchronisé sur le réseau pour envoyer les résultats directement avec une estampille temporelle synchronisée par rapport au temps local du jour ou UTC. La synchronisation peut survenir au moment du réveil du module à transpondeur 10 par le signal de champ électromagnétique transmis par l'antenne 3 de la figure 1 avec une modulation de synchronisation en rapport à la base de temps de l'unité à décodeur 4. Cette modulation dans le signal de réveil à 125 kHz peut être effectué par une modulation tout ou rien ("ON-OFF Keying" en terminologie anglaise).

Pour cette modulation du signal de champ électromagnétique de réveil, un code d'identification de l'antenne peut aussi être modulé pour définir de quelle antenne provient le signal de champ électromagnétique pour le module à transpondeur le détectant. Après l'émission des commandes de réveil, de synchronisation et par la suite l'émission de données, le signal de champ électromagnétique généré LF ne varie plus en fréquence et en amplitude pour permettre la mesure de l'intensité du champ électromagnétique par chaque module à transpondeur activé.

Comme précédemment indiqué, la base de temps 121 dans le microcontrôleur 12 du module à transpondeur 10 de la figure 2, peut être synchronisée une fois réveillée à la base de temps de l'unité à décodeur pour fournir un temps de passage précis transmis par le module à transpondeur. Cette synchronisation peut être transmise par une modulation du type tout ou rien dans le signal de champ électromagnétique à basse fréquence LF.

Une explication est encore donnée ci-dessous pour bien comprendre la manière de déterminer le temps précis du passage sur la ligne de passage 6 par l'intermédiaire des mesures effectuées dans le module à transpondeur 10. Il est tout d'abord à noter qu'il n'est pas nécessaire de transmettre le temps en cours de la course au module à transpondeur 10 pour la détermination d'un temps de passage dans ledit module. Le système de mesure 1 est conçu pour qu'il puisse travailler sans une communication retour (Uplink) de l'unité à décodeur 4 au module à transpondeur 10.

Chaque module à transpondeur 10 possède sa propre base de temps 121, qui débute à compter dès le réveil du module à transpondeur. L'algorithme dans le module à transpondeur 10 calcule le temps de passage par rapport à sa propre base de temps 121. Lorsqu'il transmet le résultat à l'unité à décodeur 4, il transmet le temps de passage Tp plus la valeur du temps de comptage de sa base de temps activée, lorsqu'il envoie le message Ts. La transmission du message prend un temps fixé connu Tv, qui est le temps de vol du signal UHF du module à transpondeur 10 à l'unité à décodeur 4. L'unité à décodeur 4 assigne ou attribue une estampille temporelle, qui est synchronisée au temps du jour Trt à chaque message reçu. Ainsi il peut convertir l'estampille temporelle du module à transpondeur 10 à une estampille temporelle du temps du jour Tpt selon la formule suivante :

$$Tpt = Trt - Tv - (Ts - Tp) = Trt - Tv - Ts + Tp$$

L'avantage avec ce système de mesure du temps est qu'il peut travailler avec une communication radio dans une seule direction du module à transpondeur 10 à l'unité à décodeur 4.

A titre d'exemple chiffré pour comprendre le fonctionnement, le module à transpondeur 10 se réveille et sa base de temps débute à 0 s. Par exemple 600 ms plus tard, il passe la ligne d'arrivée. Environ 50 ms plus tard, l'algorithme analysant la courbe détecte que la ligne de passage est franchie et calcule sur la base de toutes les données, qui étaient prises depuis le réveil du module à transpondeur 10, le temps de passage via la base de temps du module à transpondeur 10. Cela veut dire, qu'il calcule le temps de passage par exemple à 599 ms.

Après cela, le module à transpondeur 10 envoie le message du résultat du temps de passage déterminé avec le temps de passage Tp égal à 599 ms et le temps d'émission Ts égal à 650 ms. L'unité à décodeur 4 reçoit ce message par exemple à 14 h 1 min 32 s, avec le temps de transmission UHF ou temps de vol Tv, qui est de 2 ms. Selon le calcul suivant, cela donne :

$$Tpt = Trt - Tv - Ts + Tp = 14\ h\ 1\ min\ 32\ s - 2\ ms - 650\ ms + 599\ ms$$
$$= 14\ h\ 1\ min\ 31\ s\ 947\ ms$$

Pour être sûr que l'information est reçue par l'unité à décodeur 4, le module à transpondeur 10 répète le résultat 14 ms plus tard, et il envoie :

Tp égal à 599 ms (idem car même passage) et Ts égal à 664 ms (changé car 14 ms plus tard).

Le décodeur reçoit ce message à 14 h 1 min 32 s 14 ms et calcule :

$$Tpt = Trt - Tv - Ts + Tp = 14\ h\ 1\ min\ 32\ s\ 14\ ms - 2ms - 664ms +$$

$$599\ ms = 14\ h\ 1\ min\ 31\ s\ 947\ ms$$

Cela correspond au même résultat que précédemment, ainsi l'unité à décodeur 4 sait que c'est une information redondante. Le résultat calculé dans le module à transpondeur 10 est généralement transmis à répétition jusqu'à ce que l'unité à décodeur 4 lui dise de s'arrêter par une communication retour (Uplink) ou qu'une interruption survienne.

Il est à noter que selon une variante du système de mesure d'un temps de passage, le module à transpondeur 10 peut également transmettre uniquement le temps depuis le passage Tsp, qui est égal à Ts - Tp au lieu de deux informations séparées. Le calcul dans l'unité à décodeur 4 deviendrait par la suite :

$$Tpt = Trt - Tv - Ts - Tsp$$

Avec cela, cela procure l'avantage que moins d'information est à transmettre du module à transpondeur 10 à l'unité à décodeur 4. La consommation électrique du module à transpondeur est donc bien réduite par rapport au fonctionnement des systèmes de mesure de l'état de la technique.

Pour le procédé de détermination d'un temps de passage, le module à transpondeur 10 doit tout d'abord être réveillé par la détection du champ électromagnétique à basse fréquence LF de l'antenne 3 de la figure 1. Ensuite la module à transpondeur 10 activé peut mesurer plusieurs intensités successives du champ électromagnétique capté afin de reconstruire la courbe de champ électromagnétique ou magnétique directement dans le module à transpondeur. De cette manière, il peut déterminer directement le temps de passage. Ce temps de passage est déterminé en fonction de la base de temps du module à transpondeur. Le résultat du calcul de ce temps de passage est par la suite transmis par le module à transpondeur à l'unité à décodeur 4 du système de mesure 1. Il est également transmis par le module à transpondeur dans le même message, la valeur de la base de temps du module à transpondeur 10, qui peut être synchronisée au moment du réveil. Une adaptation temporelle est effectuée dans l'unité à décodeur 4 pour déterminer précisément et facilement le temps de passage exact suite au message reçu du module à transpondeur.

A partir de la description qui vient d'être faite, plusieurs variantes du module à transpondeur, du système et du procédé de détermination d'au moins un temps de passage d'une ligne de passage dans une compétition sportive peuvent être conçues par l'homme du métier sans sortir du cadre de l'invention définie par les revendications. Il peut aussi être imaginé que le module à transpondeur soit activé avant la détection du signal du champ électromagnétique à basse fréquence.

**Revendications**

1. Module à transpondeur (10) destiné à être disposé sur un objet en mouvement pour la détermination d'un temps de passage sur une ligne de passage (6) pour une compétition sportive d'un système de mesure (1), le système comprenant au moins une unité d'émission (2) d'un signal de champ électromagnétique à basse fréquence (LF) par une antenne (3) disposée au niveau de la ligne de passage (6) et une unité à décodeur (4) pour au moins recevoir au moins un signal de mesure du module à transpondeur activé à proximité de la ligne de passage, le module à transpondeur comprenant un récepteur de signaux à basse fréquence (14) pour recevoir le signal de champ électromagnétique (LF) par une antenne de réception (13) afin d'être réveillé par ce signal de champ électromagnétique, un microcontrôleur (12) recevant un signal de réception du récepteur (14), au moins un émetteur (16) en liaison avec le microcontrôleur (12) pour la transmission par une antenne haute fréquence (15) d'au moins un résultat de mesure dans un signal de mesure à haute fréquence,
   **caractérisé en ce que** le module à transpondeur (10) comprend une base de temps (121) dans le microcontrôleur (12), la base de temps (121) étant activée dès la réception par l'antenne de réception (13) du récepteur de signaux à basse fréquence (14) du signal de champ électromagnétique à basse fréquence (LF) au niveau d'une ligne de passage (6), le signal de champ électromagnétique étant à modulation d'une commande de synchronisation de manière à synchroniser la base de temps (121) du microcontrôleur (12) du module à transpondeur (10) sur la base d'une base de temps de l'unité à décodeur (4) du système de mesure (1), et
   **en ce que** le microcontrôleur (12) une fois réveillé est capable de mesurer plusieurs intensités successives du signal de champ électromagnétique capté de manière à reconstruire une courbe du champ électromagnétique et déterminer un temps de passage directement dans le module à transpondeur (10) par l'intermédiaire de sa base de temps activée et synchronisée, afin de transmettre à l'unité à décodeur (4) du système de mesure (1) le résultat du temps de passage déterminé par le microcontrôleur (12) plus la valeur du temps de comptage de sa base de temps activée lorsque le message contenant le résultat est transmis, ladite unité à décodeur (4) étant agencée pour assigner ou attribuer une estampille temporelle, qui est synchronisée au temps du jour à chaque message reçu du module à transpondeur et pour permettre à l'unité à décodeur (4) de convertir l'estampille temporelle du module à transpondeur (10) à une estampille temporelle du temps du jour.

2. Module à transpondeur (10) selon la revendication 1, **caractérisé en ce que** l'antenne de réception (13) est une antenne triaxiale de manière à permettre au microcontrôleur de mesurer plusieurs intensités successives du signal de champ électromagnétique à basse fréquence capté selon trois axes de mesure.

3. Module à transpondeur (10) selon la revendication 1, **caractérisé en ce que** le microcontrôleur (12) comprend une mémoire (122) pour mémoriser toutes les intensités du champ électromagnétique capté afin de permettre au microcontrôleur (12) de reconstruire la courbe du champ électromagnétique et déterminer le temps de passage sur la ligne de passage (6) du système de mesure (1).

4. Module à transpondeur (10) selon la revendication 1, **caractérisé en ce qu'**il est destiné à transmettre à l'unité à décodeur (4) du système de mesure (1) la valeur de la base de temps (121) activée avec le résultat du temps de passage déterminé par le microcontrôleur (12).

5. Module à transpondeur (10) selon la revendication 1, **caractérisé en ce qu'**un algorithme dédicacé ou microprogramme est mémorisé dans le microcontrôleur (12) pour permettre la détermination du temps de passage par l'intermédiaire de sa base de temps (121) activée.

6. Module à transpondeur (10) selon la revendication 5, **caractérisé en ce que** le module à transpondeur comprend un émetteur-récepteur (16) pour recevoir par l'antenne haute fréquence (15), une fois activé, un signal de remise à jour de l'algorithme ou du microprogramme par l'unité à décodeur (4) du système de mesure (1) ou par un dispositif de mise à jour dédicacé.

7. Module à transpondeur (10) selon la revendication 1, **caractérisé en ce qu'**il est prévu de transmettre plusieurs fois le résultat du temps de passage déterminé dans le microcontrôleur (12) à des intervalles de temps réguliers ou à des intervalles de temps aléatoires pour l'unité à décodeur (4) du système de mesure, jusqu'à recevoir une confirmation de l'unité à décodeur en utilisant un canal UHF par l'antenne haute fréquence (15) d'un émetteur-récepteur (16) du module à transpondeur (10), ou jusqu'à ce qu'il atteigne un temps mort ou interrompe de transmettre.

8. Système de mesure (1) d'au moins un temps de passage, qui comprend au moins un module à transpondeur (10) selon l'une des revendications précédentes pour la détermination d'un temps de passage sur une ligne de passage (6), ledit module à transpondeur (10) étant porté par un objet en mouvement, le système comprenant au moins une unité d'émission (2) d'un signal de champ électromagnétique à basse fréquence (LF) par une antenne d'émission (3) disposée au niveau de la ligne de passage (6) et une unité à décodeur (4) pour au moins recevoir au moins un signal de mesure du module à transpondeur activé à proximité de la ligne de passage, le module à transpondeur comprenant un récepteur de signaux à basse fréquence (14) pour recevoir le signal de champ électromagnétique (LF) par une antenne de réception (13) afin d'être réveillé par ce signal de champ électromagnétique, un microcontrôleur (12) recevant un signal de réception du récepteur (14), au moins un émetteur (16) en liaison avec la microcontrôleur (12) pour la transmission par une antenne haute fréquence (15) d'au moins un résultat de mesure dans un signal de mesure à haute fréquence,
**caractérisé en ce que** chaque module à transpondeur (10) comprend une base de temps (121) dans le microcontrôleur (12), la base de temps (121) étant activée dès la réception par ledit récepteur de signaux à basse fréquence (14) du module à transpondeur (10), du signal de champ électromagnétique généré par l'antenne d'émission (3) au niveau d'une ligne de passage (6), le signal de champ électromagnétique étant à modulation d'une commande de synchronisation de manière à synchroniser la base de temps (121) du microcontrôleur (12) du module à transpondeur (10) sur la base d'une base de temps de l'unité à décodeur (4) du système de mesure (1),
**en ce que** le microcontrôleur (12) une fois réveillé est capable de mesurer plusieurs intensités successives du signal de champ électromagnétique capté de manière à reconstruire une courbe du champ électromagnétique et déterminer un temps de passage directement dans le module à transpondeur (10) par l'intermédiaire de sa base de temps activée et synchronisée, afin de transmettre à l'unité à décodeur (4) du système de mesure (1) un signal du résultat du temps de passage déterminé par le microcontrôleur (12) plus la valeur du temps de comptage de sa base de temps activée lorsque le message contenant le résultat est transmis, et
**en ce que** l'unité à décodeur (4) assigne une estampille temporelle au signal du résultat du temps de passage reçu du module à transpondeur (10) plus la valeur du temps de comptage de sa base de temps activée, pour permettre à l'unité à décodeur (4) de convertir l'estampille temporelle du module à transpondeur (10) à une estampille temporelle du temps du jour et pour déterminer le temps de passage exact sur la base d'une base de temps de l'unité à décodeur (4) du système de mesure (1).

9. Système de mesure (1) selon la revendication 8, **caractérisé en ce que** le module à transpondeur est destiné à transmettre à l'unité à décodeur (4) du système de mesure (1) un signal de la valeur de sa base de temps (121) activée avec le résultat du temps de passage déterminé par le microcontrôleur (12) dans le module à transpondeur (10).

10. Système de mesure (1) selon la revendication 9, **caractérisé en ce que** l'unité à décodeur (4) est destinée à recevoir le signal de mesure du module à transpondeur (10) et à convertir une estampille temporelle de la base de temps (121) du module à transpondeur (10) à une estampille temporelle du temps du jour ou du temps de course.

11. Système de mesure (1) selon la revendication 8, **caractérisé en ce que** l'unité à décodeur (4) est agencée pour transmettre par l'antenne haute fréquence (5) un signal UHF de remise à jour d'un algorithme dédicacé ou microprogramme reçu par l'antenne haute fréquence (15) d'un émetteur-récepteur (16) du module à transpondeur (10).

12. Système de mesure (1) selon la revendication 8, **caractérisé en ce que** l'unité à décodeur (4) est agencée pour transmettre par un canal UHF à l'antenne haute fréquence (15) d'un émetteur-récepteur (16) du module à transpondeur (10), une confirmation de bonne réception du signal de mesure.

13. Système de mesure (1) selon la revendication 12, **caractérisé en ce que** l'unité à décodeur (4) transmet un signal d'interruption pour placer le module à transpondeur (10) dans un mode de repos après réception du signal de mesure du module à transpondeur (10).

14. Système de mesure (1) selon la revendication 8, **caractérisé en ce que** le module à transpondeur (10) et l'unité à décodeur (4) sont agencés pour effectuer une communication UHF par l'utilisation de sauts de fréquence notamment pour la transmission d'un signal du résultat du temps de passage ou d'une répétition du signal du résultat du temps de passage transmis du module à transpondeur (10).

15. Procédé de mesure d'au moins un temps de passage dans un système de mesure (1) selon l'une des revendications 8 à 14, le système de mesure (1) comprenant au moins un module à transpondeur (10) selon l'une des revendications 1 à 7

pour la détermination d'un temps de passage sur une ligne de passage (6), le procédé comprenant des étapes consistant à :

- générer un signal de champ électromagnétique (LF) par une unité d'émission (2) du système de mesure (1),
- activer le module à transpondeur personnalisé (10) dès la réception par ledit récepteur de signaux à basse fréquence (14), du signal de champ électromagnétique (LF) avant le passage de la ligne de passage, le signal de champ électromagnétique étant à modulation d'une commande de synchronisation de manière à synchroniser une base de temps (121) d'un microcontrôleur (12) du module à transpondeur (10) sur la base d'une base de temps de l'unité à décodeur (4) du système de mesure (1),
- mesurer plusieurs intensités du signal de champ électromagnétique (LF) dans le module à transpondeur une fois réveillé,
- déterminer directement dans le module à transpondeur par reconstruction d'une courbe de champ électromagnétique dans le module à transpondeur (10), qui comprend la base de temps (121) activée dès le réveil du module à transpondeur, un temps de passage du module à transpondeur sur la ligne de passage, et
- transmettre par le module à transpondeur (10) un signal du résultat de la détermination du temps de passage plus la valeur du temps de comptage de sa base de temps activée à une unité à décodeur (4) du système de mesure (1) pour assigner une estampille temporelle au signal du résultat reçu du module à transpondeur (10) plus la valeur du temps de comptage de sa base de temps activée, et pour convertir l'estampille temporelle du module à transpondeur (10) à une estampille temporelle du temps du jour pour la détermination précise du temps de passage de la ligne de passage.

16. Procédé de mesure selon la revendication 15, **caractérisé en ce que** le module à transpondeur (10) activé envoie un premier message par un émetteur-récepteur (16) à l'unité à décodeur (4) comme un premier contact après le réveil, un second message comme une prédiction du passage juste avant le passage proprement dit de la ligne de passage (6), et un troisième message avec le temps exact de passage déterminé dans le module à transpondeur.

17. Procédé de mesure selon la revendication 16, **caractérisé en ce que** la prédiction du passage de la ligne du second message est utilisée dans l'unité à décodeur (4) pour arrêter un temps de course sur un dispositif d'affichage, et pour éviter en retour en arrière du temps de course lorsque le temps exact du passage est connu.

18. Procédé de mesure selon la revendication 16, **caractérisé en ce que** le module à transpondeur (10) transmet plusieurs fois à des intervalles temporels réguliers ou aléatoires, le signal du résultat du temps de passage avec la valeur de sa base de temps (121) activée jusqu'à la réception par un canal UHF de la confirmation de réception de l'unité à décodeur (4).

19. Procédé de mesure selon la revendication 16, **caractérisé en ce que** l'unité à décodeur (4) transmet par un canal UHF au module à transpondeur (10), un signal de remise à jour de l'algorithme dédicacé ou du microprogramme pour la détermination dans le microcontrôleur (12) du temps de passage.

**Patentansprüche**

1. Transpondermodul (10), das dazu bestimmt ist, auf einem sich bewegenden Objekt angeordnet zu werden, zur Bestimmung einer Überquerungszeit auf einer Überquerungslinie (6) für einen Sportwettbewerb eines Messsystems (1), wobei das System mindestens eine Aussendungseinheit (2) für ein niederfrequentes elektromagnetisches Feldsignal (LF) durch eine Antenne (3), die auf Höhe der Überquerungslinie (6) angeordnet ist, und eine Decoder-Einheit (4) umfasst, um zumindest mindestens ein Messsignal des aktivierten Transpondermoduls in der Nähe der Überquerungslinie zu empfangen, wobei das Transpondermodul einen Empfänger (14) für niederfrequente Signale zum Empfangen des elektromagnetischen Feldsignals (LF) durch eine Empfangsantenne (13), um durch dieses elektromagnetische Feldsignal aufgeweckt zu werden, einen Mikrocontroller (12), der ein Empfangssignal des Empfängers (14) empfängt, mindestens einen Sender (16) in Verbindung mit dem Mikrocontroller (12) zur Übertragung von mindestens einem Messergebnis in einem hochfrequenten Messsignal durch eine Hochfrequenz-Antenne (15) umfasst,

   **dadurch gekennzeichnet, dass** das Transpondermodul (10) eine Zeitbasis (121) in dem Mikrocontroller (12) umfasst, wobei die Zeitbasis (121) ab dem Empfang des niederfrequenten elektromagnetischen Feldsignals (LF) auf Höhe einer Überquerungslinie (6) durch die Empfangsantenne (13) des Empfängers (14) für niederfrequente Signale aktiviert wird, wobei das elektromagnetische Feldsignal zur Modulation eines Synchronisierungsbefehls ist, um die Zeitbasis (121) des Mikrocontrollers (12) des Transpondermoduls (10) auf der Basis einer Zeitbasis der Decoder-Einheit (4) des Messsystems (1) zu synchronisieren, und

   dass der Mikrocontroller (12), sobald er aufgeweckt wurde, dazu in der Lage ist, mehrere aufeinanderfolgende Stärken des erfassten elektromagnetischen Feldsignals zu messen, um eine Kurve des elektromagnetischen Felds zu rekonstruieren und eine Überquerungszeit direkt in dem Transpondermodul (10) mittels seiner aktivierten und synchronisierten Zeitbasis zu bestimmen, um das Ergebnis der durch den Mikrocontroller (12) bestimmten Überquerungszeit plus dem Wert der Zählzeit seiner aktivierten Zeitbasis an die Decoder-Einheit (4) des Messsystems (1) zu übertragen, wenn die Nachricht, die das Ergebnis enthält, übertragen wird, wobei die Decoder-Einheit (4) zum Zuweisen oder Zuteilen eines Zeitstempels, der mit der Tageszeit jeder Nachricht, die von dem Transpondermodul empfangen wird, synchronisiert wird, und zum Ermöglichen, dass die Decoder-Einheit (4) den Zeitstempel des Transponder-Moduls (10) in einen Zeitstempel der Tageszeit umwandelt, eingerichtet ist.

2. Transpondermodul (10) nach Anspruch 1, **dadurch gekennzeichnet, dass** die Empfangsantenne (13) eine dreiachsige Antenne ist, um zu ermöglichen, dass der Mikrocontroller mehrere aufeinanderfolgende Stärken des niederfrequenten elektromagnetischen Feldsignals misst, das entlang drei Messachsen erfasst wird.

3. Transpondermodul (10) nach Anspruch 1, **dadurch gekennzeichnet, dass** der Mikrocontroller (12) einen Speicher (122) zum Speichern von allen Stärken des erfassten elektromagnetischen Felds umfasst, um zu ermöglichen, dass der Mikrocontroller (12) die Kurve des elektromagnetischen Felds rekonstruiert und die Überquerungszeit auf der Überquerungslinie (6) des Messsystems (1) bestimmt.

4. Transpondermodul (10) nach Anspruch 1, **dadurch gekennzeichnet, dass** es dazu bestimmt ist, den Wert der aktivierten Zeitbasis (121) mit dem Ergebnis der durch den Mikrocontroller (12) bestimmten Überquerungszeit an die Decoder-Einheit (4) des Messsystems (1) zu übertragen.

**5.** Transpondermodul (10) nach Anspruch 1, **dadurch gekennzeichnet, dass** ein dedizierter Algorithmus oder ein Mikroprogramm in dem Mikrocontroller (12) zum Ermöglichen der Bestimmung der Überquerungszeit mittels seiner aktivierten Zeitbasis (121) gespeichert ist.

**6.** Transpondermodul (10) nach Anspruch 5, **dadurch gekennzeichnet, dass** das Transpondermodul einen Sender-Empfänger (16) zum Empfangen eines Signals durch die Hochfrequenz-Antenne (15), sobald sie aktiviert wurde, zum Aktualisieren des Algorithmus oder des Mikroprogramms durch die Decoder-Einheit (4) des Messsystems (1) oder durch eine dedizierte Aktualisierungsvorrichtung umfasst.

**7.** Transpondermodul (10) nach Anspruch 1, **dadurch gekennzeichnet, dass** es dazu vorgesehen ist, das Ergebnis der in dem Mikrocontroller (12) bestimmten Überquerungszeit mehrmals in regelmäßigen Zeitintervallen oder in zufälligen Zeitintervallen für die Decoder-Einheit (4) des Messsystems zu übertragen, bis eine Bestätigung der Decoder-Einheit unter Verwendung eines UHF-Kanals durch die Hochfrequenz-Antenne (15) eines Sender-Empfängers (16) des Transpondermoduls (10) empfangen wird oder bis eine Totzeit oder Unterbrechung des Übertragens erreicht wird.

**8.** Messsystem (1) für mindestens eine Überquerungszeit, das mindestens ein Transpondermodul (10) nach einem der vorhergehenden Ansprüche zur Bestimmung einer Überquerungszeit auf einer Überquerungslinie (6) umfasst, wobei das Transpondermodul (10) von einem sich bewegenden Objekt getragen wird, wobei das System mindestens eine Aussendungseinheit (2) für ein niederfrequentes elektromagnetisches Feldsignal (LF) durch eine Aussendungsantenne (3), die auf Höhe der Überquerungslinie (6) angeordnet ist, und eine Decoder-Einheit (4) umfasst, um zumindest mindestens ein Messsignal des aktivierten Transpondermoduls in der Nähe der Überquerungslinie zu empfangen, wobei das Transpondermodul einen Empfänger (14) für niederfrequente Signale zum Empfang des elektromagnetischen Feldsignals (LF) durch eine Empfangsantenne (13), um durch dieses elektromagnetische Feldsignal aufgeweckt zu werden, einen Mikrocontroller (12), der ein Empfangssignal des Empfängers (14) empfängt, mindestens einen Sender (16) in Verbindung mit dem Mikrocontroller (12) zur Übertragung von mindestens einem Messergebnis in einem hochfrequenten Messsignal durch eine Hochfrequenz-Antenne (15) umfasst, **dadurch gekennzeichnet, dass** jedes Transpondermodul (10) eine Zeitbasis (121) in dem Mikrocontroller (12) umfasst, wobei die Zeitbasis (121) ab dem Empfang des durch die Aussendungsantenne (3) erzeugten elektromagnetischen Feldsignals auf Höhe einer Überquerungslinie (6) durch den Empfänger (14) für niederfrequente Signale des Transpondermoduls (10) aktiviert wird, wobei das elektromagnetische Feldsignal zur Modulation eines Synchronisierungsbefehls ist, um die Zeitbasis (121) des Mikrocontrollers (12) des Transpondermoduls (10) auf der Basis einer Zeitbasis der Decoder-Einheit (4) des Messsystems (1) zu synchronisieren, und
dass der Mikrocontroller (12), sobald er aufgeweckt wurde, dazu in der Lage ist, mehrere aufeinanderfolgende Stärken des erfassten elektromagnetischen Feldsignals zu messen, um eine Kurve des elektromagnetischen Felds zu rekonstruieren und eine Überquerungszeit direkt in dem Transpondermodul (10) mittels seiner aktivierten und synchronisierten Zeitbasis zu bestimmen, um das Ergebnis der durch den Mikrocontroller (12) bestimmten Überquerungszeit plus dem Wert der Zählzeit seiner aktivierten Zeitbasis an die Decoder-Einheit (4) des Messsystems (1) zu übertragen, wenn die Nachricht, die das Ergebnis enthält, übertragen wird, und
dass die Decoder-Einheit (4) einen Zeitstempel dem Signal des Ergebnisses der Überquerungszeit, das von dem Transpondermodul (10) empfangen wurde, plus dem Wert der Zählzeit seiner aktivierten Zeitbasis zuweist, um zu ermöglichen, dass die Decoder-Einheit (4) den Zeitstempel des Transponder-Moduls (10) in einen Zeitstempel der Tageszeit umwandelt, und um die exakte Überquerungszeit auf der Basis einer Zeitbasis der Decoder-Einheit (4) des Messsystems (1) zu bestimmen.

**9.** Messsystem (1) nach Anspruch 8, **dadurch gekennzeichnet, dass** das Transpondermodul dazu bestimmt ist, ein Signal des Werts seiner aktivierten Zeitbasis (121) mit dem Ergebnis der Überquerungszeit, die von dem Mikrocontroller (12) in dem Transpondermodul (10) bestimmt wurde, an die Decoder-Einheit (4) des Messsystems (1) zu übertragen.

**10.** Messsystem (1) nach Anspruch 9, **dadurch gekennzeichnet, dass** die Decoder-Einheit (4) dazu bestimmt ist, das Messsignal des Transpondermoduls (10) zu empfangen und einen Zeitstempel der Zeitbasis (121) des Transpondermoduls (10) in einen Zeitstempel der Tageszeit oder der Laufzeit umzuwandeln.

**11.** Messsystem (1) nach Anspruch 8, **dadurch gekennzeichnet, dass** die Decoder-Einheit (4) zum Übertragen eines UHF-Signals durch die Hochfrequenz-Antenne (5) zur Aktualisierung eines durch die Hochfrequenz-Antenne (15) dedizierten Algorithmus oder Mikroprogramms eines Sender-Empfängers (16) des Transpondermoduls (10) eingerichtet ist.

12. Messsystem (1) nach Anspruch 8, **dadurch gekennzeichnet, dass** die Decoder-Einheit (4) zum Übertragen einer Bestätigung eines guten Empfangs des Messsignals durch einen UHF-Kanal an die Hochfrequenz-Antenne (15) eines Sender-Empfängers (16) des Transpondermoduls (10) eingerichtet ist.

13. Messsystem (1) nach Anspruch 12, **dadurch gekennzeichnet, dass** die Decoder-Einheit (4) ein Unterbrechungssignal zum Versetzen des Transpondermoduls (10) in einen Ruhemodus nach Empfang des Messsignals des Transpondermoduls (10) überträgt.

14. Messsystem (1) nach Anspruch 8, **dadurch gekennzeichnet, dass** das Transpondermodul (10) und die Decoder-Einheit (4) zum Bewirken einer UHF-Kommunikation durch Verwendung von Frequenzsprüngen, insbesondere zur Übertragung eines Signals des Ergebnisses der Überquerungszeit oder einer Wiederholung des Signals des Ergebnisses der Überquerungszeit, das von dem Transpondermodul (10) übertragen wird, eingerichtet sind.

15. Verfahren zur Messung von mindestens einer Überquerungszeit in einem Messsystem (1) nach einem der Ansprüche 8 bis 14, wobei das Messsystem (1) mindestens ein Transpondermodul (10) nach einem der Ansprüche 1 bis 7 zur Bestimmung einer Überquerungszeit auf einer Überquerungslinie (6) umfasst, wobei das Verfahren Schritte umfasst, bestehend in:

    - Erzeugen eines elektromagnetischen Feldsignals (LF) durch eine Aussendungseinheit (2) des Messsystems (1),
    - Aktivieren des personalisierten Transpondermoduls (10) ab dem Empfang des elektromagnetischen Feldsignals (LF) durch den Empfänger (14) für niederfrequente Signale vor der Überquerung der Überquerungslinie, wobei das elektromagnetische Feldsignal zur Modulation eines Synchronisierungsbefehls ist, um eine Zeitbasis (121) eines Mikrocontrollers (12) des Transpondermoduls (10) auf der Basis einer Zeitbasis der Decoder-Einheit (4) des Messsystems (1) zu synchronisieren,
    - Messen von mehreren Stärken des elektromagnetischen Feldsignals (LF) in dem Transpondermodul, sobald es aufgeweckt wurde,
    - direktes Bestimmen einer Überquerungszeit des Transpondermoduls auf der Überquerungslinie durch Rekonstruktion einer elektromagnetischen Feldkurve in dem Transpondermodul (10), das die ab dem Aufwecken des Transpondermoduls aktivierte Zeitbasis (121) umfasst, und
    - Übertragen eines Signals des Ergebnisses der Bestimmung der Überquerungszeit plus dem Wert der Zählzeit seiner aktivierten Zeitbasis durch das Transpondermodul (10) an eine Decoder-Einheit (4) des Messsystems (1) zum Zuweisen eines Zeitstempels für das Signal des Ergebnisses, das von dem Transpondermodul (10) empfangen wurde, plus dem Wert der Zählzeit seiner aktivierten Zeitbasis und zum Umwandeln des Zeitstempels des Transponder-Moduls (10) in einen Zeitstempel der Tageszeit zur präzisen Bestimmung der Überquerungszeit der Überquerungslinie.

16. Messverfahren nach Anspruch 15, **dadurch gekennzeichnet, dass** das aktivierte Transpondermodul (10) eine erste Nachricht durch einen Sender-Empfänger (16) an die Decoder-Einheit (4) als einen ersten Kontakt nach dem Aufwecken, eine zweite Nachricht als eine Vorhersage der Überquerung unmittelbar vor der eigentlichen Überquerung der Überquerungslinie (6) und eine dritte Nachricht mit der in dem Transpondermodul bestimmten exakten Überquerungszeit sendet.

17. Messverfahren nach Anspruch 16, **dadurch gekennzeichnet, dass** die Vorhersage der Überquerung der Linie der zweiten Nachricht in der Decoder-Einheit (4) zum Stoppen einer Laufzeit auf einer Anzeigevorrichtung und zum Verhindern eines Zurückstellens der Laufzeit, wenn die exakte Überquerungszeit bekannt ist, verwendet wird.

18. Messverfahren nach Anspruch 16, **dadurch gekennzeichnet, dass** das Transpondermodul (10) das Signal des Ergebnisses der Überquerungszeit mit dem Wert seiner aktivierten Zeitbasis (121) mehrmals in regelmäßigen oder zufälligen Zeitintervallen bis zum Empfang der Bestätigung eines Empfangs von der Decoder-Einheit (4) durch einen UHF-Kanal überträgt.

19. Messverfahren nach Anspruch 16, **dadurch gekennzeichnet, dass** die Decoder-Einheit (4) ein Signal zur Aktualisierung des dedizierten Algorithmus oder des Mikroprogramms zur Bestimmung der Überquerungszeit in dem Mikrocontroller (12) durch einen UHF-Kanal an das Transpondermodul (10) überträgt.

**Claims**

1.  Transponder module (10) intended to be disposed on a moving object for the determination of a crossing time on a line of passage (6) for a sports competition of a measuring system (1), the system comprising at least one transmission unit (2) for a low-frequency (LF) electromagnetic field signal via an antenna (3) disposed at the level of the line of passage (6), and a decoder unit (4), in order at least to receive at least one measurement signal from the activated transponder module near the line of passage, the transponder module comprising a low-frequency signal receiver (14) in order to receive the electromagnetic field signal (LF) via a receiving antenna (13) in order to be woken up by this electromagnetic field signal, a microcontroller (12) receiving a receiving signal from the receiver (14), at least one transmitter (16) linked to the microcontroller (12) for transmission via a high-frequency antenna (15) of at least one measurement result in a high-frequency measurement signal,
    **characterised in that** the transponder module (10) comprises a time base (121) in the microcontroller (12), the time base (121) being activated upon the receipt, by the receiving antenna (13) of the low-frequency signal receiver (14), of the low-frequency electromagnetic field signal (LF) at a line of passage (6), the electromagnetic field signal including modulation of a synchronisation command in order to synchronise the time base (121) of the microcontroller (12) of the transponder module (10) on the basis of a time base of the decoder unit (4) of the measuring system (1), and **in that** the microcontroller (12), once woken up, is capable of measuring several successive intensities of the captured electromagnetic field signal in order to reconstruct an electromagnetic field curve and to determine a crossing time directly in the transponder module (10) by means of the activated and synchronised time base thereof, in order to transmit, to the decoder unit (4) of the measurement system (1), the result of the crossing time determined by the microcontroller (12) plus the value of the counting time of the activated time base thereof, when the message containing the result is transmitted, said decoder unit (4) being arranged to assign or attribute a temporal stamp, which is synchronised to the time of day, to each message received from the transponder module and to allow the decoder unit (4) to convert the temporal stamp of the transponder module (10) into a temporal stamp of the time of day.

2.  Transponder module (10) according to claim 1, **characterised in that** the receiving antenna (13) is a triaxial antenna in order to make it possible for the microcontroller to measure several successive intensities of the captured low-frequency electromagnetic field signal along three measurement axes.

3.  Transponder module (10) according to claim 1, **characterised in that** the microcontroller (12) comprises a memory (122) in order to store all the intensities of the captured electromagnetic field in order to make it possible for the microcontroller (12) to reconstruct the curve of the electromagnetic field and to determine the crossing time on the line of passage (6) of the measuring system (1).

4.  Transponder module (10) according to claim 1, **characterised in that** it is intended to transmit, to the decoder unit (4) of the measuring system (1), the value of the activated time base (121) with the result of the crossing time determined by the microcontroller (12).

5.  Transponder module (10) according to claim 1, **characterised in that** a dedicated algorithm or microprogram is stored in the microcontroller (12) in order to allow the determination of the crossing time by means of the activated time base (121) thereof.

6.  Transponder module (10) according to claim 5, **characterised in that** the transponder module comprises a transmitter-receiver (16) in order to receive, via the high-frequency antenna (15), once activated, a signal for updating the algorithm or microprogram by the decoder unit (4) of the measuring system (1) or by a dedicated updating device.

7.  Transponder module (10) according to claim 1, **characterised in that** it is provided to transmit several times the result of the crossing time determined in the microcontroller (12) at regular time intervals or at random time intervals for the decoder unit (4) of the measuring system, until receiving confirmation from the decoder unit using a UHF channel via the high-frequency antenna (15) of a transmitter-receiver (16) of the transponder module (10), or until it reaches a dead time or an interruption in transmission.

8.  Measuring system (1) of at least one crossing time, which comprises at least one transponder module (10) according to one of the preceding claims for determination of a crossing time on a line of passage (6), said transponder module (10) being carried by a moving object, the system comprising at least one transmission unit (2) of a low-frequency (LF) electromagnetic field signal via a transmission antenna (3) disposed at the level of the line of passage (6) and a decoder unit (4) in order at least to receive at least one measurement signal from the activated transponder module near the line of passage, the transponder module comprising a low-frequency signal receiver (14) in order to receive the electromagnetic field signal (LF) via a receiving antenna (13) in order to be woken up by this electromagnetic field signal, a microcontroller (12) receiving a receipt signal from the receiver (14), at least one transmitter (16) linked to the microcontroller (12) for the transmission via a high-frequency antenna (15) of at least one measurement result in a high-frequency measurement signal,

**characterised in that** each transponder module (10) comprises a time base (121) in the microcontroller (12), the time base (121) being activated upon the receipt, by said low-frequency signal receiver (14) of the transponder module (10), of the electromagnetic field signal generated by the transmitting antenna (3) at a line of passage (6), the electromagnetic field signal including modulation of a synchronisation command in order to synchronise the time base (121) of the microcontroller (12) of the transponder module (10) on the basis of a time base of the decoder unit (4) of the measuring system (1),

**in that** the microcontroller (12), once woken up, is capable of measuring several successive intensities of the captured electromagnetic field signal in order to reconstruct a curve of the electromagnetic field and to determine a crossing time directly in the transponder module (10) by means of the activated and synchronised time base thereof, in order to transmit, to the decoder unit (4) of the measuring system (1), a signal of the result of the crossing time determined by the microcontroller (12) plus the value of the counting time of the activated time base thereof, when the message containing the result is transmitted, and

**in that** the decoder unit (4) assigns a temporal stamp to the signal about the result of the crossing time received from the transponder module (10) plus the value of the counting time of the activated time base thereof, to allow the decoder unit (4) to convert the temporal stamp of the transponder module (10) into a temporal stamp of the time of day and in order to determine the exact crossing time on the basis of a time base of the decoder unit (4) of the measuring system (1).

9. Measuring system (1) according to claim 8, **characterised in that** the transponder module is intended to transmit, to the decoder unit (4) of the measuring system (1), a signal of the value of the activated time base (121) thereof with the result of the crossing time determined by the microcontroller (12) in the transponder module (10).

10. Measuring system (1) according to claim 9, **characterised in that** the decoder unit (4) is intended to receive the measurement signal from the transponder module (10) and to convert a temporal stamp of the time base (121) of the transponder module (10) to a temporal stamp of the time of day or the race time.

11. Measuring system (1) according to claim 8, **characterised in that** the decoder unit (4) is provided in order to transmit, via the high-frequency antenna (5), a UHF signal for updating a dedicated algorithm or microprogram received by the high-frequency antenna (15) from a transmitter-receiver (16) of the transponder module (10).

12. Measuring system (1) according to claim 8, **characterised in that** the decoder unit (4) is provided in order to transmit, via a UHF channel to the high-frequency antenna (15) of a transmitter-receiver (16) of the transponder module (10), confirmation of good receipt of the measurement signal.

13. Measuring system (1) according to claim 12, **characterised in that** the decoder unit (4) transmits an interruption signal in order to place the transponder module (10) in a rest mode after receipt of the measuring signal from the transponder module (10).

14. Measuring system (1) according to claim 8, **characterised in that** the transponder module (10) and the decoder unit (4) are provided in order to effect a UHF communication by using frequency hopping, in particular for the transmission of a signal about the result of the crossing time or repetition of the signal of the result of the crossing time transmitted from the transponder module (10).

15. Method for measurement of at least one crossing time in a measuring system (1) according to one of the claims 8 to 14, the measuring system (1) comprising at least one transponder module (10) according to one of the claims 1 to 7 for determination of a crossing time on a line of passage (6), the method comprising steps consisting of:

- generating an electromagnetic field signal (LF) by a transmission unit (2) of the measuring system (1),
- activating the personalised transponder module (10) upon the receipt, by said low-frequency signal receiver (14), of the electromagnetic field signal (LF) before crossing the line of passage, the electromagnetic field signal including modulation of a synchronisation command in order to synchronise a time base (121) of a microcontroller (12) of the transponder module (10) on the basis of a time base of the decoder unit (4) of the measuring system (1),
- measuring several intensities of the electromagnetic field signal (LF) in the transponder module, once woken up,
- determining directly in the transponder module, by reconstruction of a curve of the electromagnetic field in the transponder module (10) which comprises the time base (121) activated upon wake-up of the transponder module, a crossing time of the transponder module on the line of passage, and

- transmitting, via the transponder module (10), a signal of the result of the determination of the crossing time plus the value of the counting time of the activated time base thereof to a decoder unit (4) of the measuring system (1) for assigning a temporal stamp to the signal of the result received from the transponder module (10) plus the value of the counting time of the activated time base thereof and for converting the temporal stamp of the transponder module (10) into a temporal stamp of the time of day for precise determination of the crossing time of the line of passage.

16. Method for measurement according to claim 15, **characterised in that** the activated transponder module (10) sends a first message via a transmitter-receiver (16) to the decoder unit (4) as a first contact after wake-up, a second message as a prediction of the crossing just before the actual crossing of the line of passage (6), and a third message with the exact crossing time determined in the transponder module.

17. Method for measurement according to claim 16, **characterised in that** the prediction of the crossing of the line of the second message is used in the decoder unit (4) in order to stop a race time on a display device and in order avoid return back of the race time when the exact crossing time is known.

18. Method for measurement according to claim 16, **characterised in that** the transponder module (10) transmits, several times at regular or random temporal intervals, the signal of the result of the crossing time with the value of the activated time base (121) thereof until receipt, via a UHF channel, of confirmation of receipt from the decoder unit (4).

19. Method for measurement according to claim 16, **characterised in that** the decoder unit (4) transmits, via a UHF channel to the transponder module (10), a signal for updating the dedicated algorithm or microprogram for determination in the microcontroller (12) of the crossing time.

Fig. 1

EP 3 316 225 B1

Fig. 2

Fig. 3

**EP 3 316 225 B1**

**RÉFÉRENCES CITÉES DANS LA DESCRIPTION**

**Documents brevets cités dans la description**

- US 20060097847 A1
- WO 0221141 A1
- EP 1447681 B1
- CH 707401 A2
- EP 2747036 A1
- EP 3073447 A1
- JP 2002228777 A